# EUROPEAN PATENT APPLICATION

(11) **EP 4 316 794 A1**
(43) Date of publication of application: **07.02.2024**
(21) Application number: 22774761.5
(22) Date of filing: 14.02.2022
(51) Int. Cl.: B29K 105/06, B29L 23/00, B62D 29/04, B29C 43/12, B29C 70/10, B29C 70/44

(54) **TUBULAR BODY AND METHOD FOR PRODUCING TUBULAR BODY**

(30) Priority: 22.03.2021 JP 2021047902
(71) Applicant: Mizuno Technics Corporation, Gifu 503-1314 (JP); MAZDA MOTOR CORPORATION, Hiroshima 730-8670 (JP)
(72) Inventor: SAITO Takeshi, Yoro-gun, Gifu 503-1314 (JP); HIROSE Makoto, Yoro-gun, Gifu 503-1314 (JP); KASHIMA Takumi, Yoro-gun, Gifu 503-1314 (JP); YANO Hiroki, Yoro-gun, Gifu 503-1314 (JP); TANAKA Chikara, Aki-gun, Hiroshima 730-8670 (JP); OKUYAMA Tomohito, Aki-gun, Hiroshima 730-8670 (JP); SHIBAHARA Taei, Aki-gun, Hiroshima 730-8670 (JP); MOTOKI Masaki, Aki-gun, Hiroshima 730-8670 (JP)
(74) Representative: Keller Schneider Patentanwaltsgesellschaft mbH
(86) International application number: PCT/JP2022/005615
(87) International publication number: WO 2022/201960

(57) **Abstract**

A tubular body (1) made of a fiber-reinforced plastic and used as a structural material of a vehicle includes corners (4) extending along an axis of the tubular body (1) on an outer circumferential surface thereof. The tubular body (1) is a tubular laminate that is formed by laminating a fabric layer (12) formed by laminating fabric materials and unidirectional material layers (11, 13). Each fabric material includes a fabric in which reinforcing fibers are woven and a plastic with which the fabric is impregnated. Each unidirectional material layer (11, 13) includes reinforcing fibers oriented in one direction and a plastic with which the reinforcing fibers are impregnated. The reinforcing fibers of each unidirectional material layer (11, 13) are oriented along the axis of the tubular laminate. The unidirectional material layers (11, 13) include an outer unidirectional material layer (13) laminated on an outer circumferential surface of the fabric layer (12), and an inner unidirectional material layer (11) laminated on an inner circumferential surface of the fabric layer.

## Description

### TECHNICAL FIELD

The present disclosure relates to a tubular body made of a fiber-reinforced plastic and a method for producing a tubular body.

### BACKGROUND ART

Tubular bodies made of fiber-reinforced plastic are lightweight yet have excellent strength. Therefore, they are widely used as structural materials for automobiles, aircraft, and the like, as well as sports equipment such as golf club shafts and tennis rackets. Among tubular bodies, for example, a square pipe having a polygonal radial cross section has a larger geometrical moment of inertia than a round pipe, which has a round radial cross section. Therefore, square pipes have excellent bending stiffness and are useful as structural materials.

With respect to such square pipes, there are shaped products made using unidirectional materials, which are fiber-reinforced plastic sheets containing reinforcing fibers oriented in one direction. Such a shaped product is formed by laminating multiple unidirectional materials around a core and then hardening it through heating. Such unidirectional materials are laminated while adjusting the orientation direction of the reinforcing fibers in accordance with the characteristics required for the square pipe. The bending stiffness of a square pipe is improved by reinforcing fibers oriented along the axis of the square pipe, whereby the strength required for a structural material is obtained.

When a unidirectional material is used for a square pipe, a large void is likely to form at corners of the square pipe. This is because the reinforced fibers oriented in the direction orthogonal to the axis are not easily shaped along the corners during the forming of the square pipe, so that the reinforced fibers become taut. As a result, cavities are likely to form between the layers. Then, the volume of the cavities increased during the heating step in the forming process, or multiple cavities are connected to each other to appear as a void in the shaped product. When breakage starting from the void occurs, the strength of the square pipe decreases. In addition, the amount of plastic increases at the corners, and the amount of plastic may become uneven over the entire square pipe.

Structural materials for vehicles and aircraft include shaped products that use fiber-reinforced plastic sheets in which fabric of reinforced fibers is impregnated with plastic. In a fabric material that is a fiber-reinforced plastic sheet, since the reinforcing fibers are crimped at sections at which warp yarns and weft yarns intersect with each other, the fabric material easily follows curved surface portions. Therefore, a fabric material that is a fiber-reinforced plastic sheet is advantageous in the case of forming complicated shapes.

Patent Literature 1 discloses a plastic fuel tank that is attached to a vehicle body of an automobile. The fuel tank includes a fiber-reinforced layer formed by laminating fabric materials. By providing fiber-reinforced layers, it is possible to impart high stiffness while reducing the weight of the fuel tank.

### CITATION LIST

### Patent Literature

Patent Literature 1: Japanese Laid-Open Patent Publication No. 2017-1618

### SUMMARY OF INVENTION

### Technical Problem

The present inventors believed that by forming a square pipe with fabric material, it would be possible to suppress the formation of voids at the corners, and by doing so, they could prevent a reduction in bending stiffness. The inventors, envisioning the use of square pipes as structural materials for reinforcing components like automobile roofs, formed the square pipes with fabric material. As a result, in the square pipes formed of fabric material, the formation of voids at the corners was prevented, and an improvement in bending stiffness was observed compared to when formed of unidirectional material.

However, while there was an improvement in bending stiffness, an issue arose during breakage of the square pipes. The issue refers to the phenomenon in which, when a significant bending load is applied to the square pipe and it starts to break, the square pipe breaks apart completely. If this phenomenon occurs in a case of an automobile colliding with a utility pole, a significant bending load is applied to the square pipe, acting as a structural material, due to the impact of the collision. In this case, the square pipe cannot withstand the bending load and breaks apart completely. As a result, the broken square pipe could pierce into unexpected locations, leading to undesirable situations.

### Solution to Problem

In accordance with one aspect of the present disclosure, a tubular body made of a fiber-reinforced plastic and used as a structural material of a vehicle is provided. The tubular body includes one or more corners extending along an axis of the tubular body on an outer circumferential surface thereof. The tubular body is a tubular laminate formed by laminating a fabric layer in which multiple fabric materials are laminated, each fabric material including a fabric in which reinforcing fibers are woven and a plastic with which the fabric is impregnated, and multiple unidirectional material layers, each unidirectional material layer including reinforcing fibers oriented in one direction and a plastic with which the reinforcing fibers are impregnated. The reinforcing fibers of each unidirectional material layer are oriented along the axis. The unidirectional material layers include an outer unidirectional material layer laminated on an outer circumferential surface of the fabric layer, and an inner unidirectional material layer laminated on an inner circumferential surface of the fabric layer.

The "corners extending along the axis" included in the "tubular body made of the fiber-reinforced plastic" are defined as follows. That is, when the outer circumferential surface of the tubular body includes multiple flat surfaces, a linear intersection portion at which adjacent flat surfaces intersect in a radial cross section is a corner, and the linear intersection portion extends along the axis. In addition, when the outer circumferential surface of the tubular body includes a flat surface and a curved surface, an intersection portion at which the flat surface and the curved surface intersect with each other in the radial cross section and at which the inclination of a tangent line in the radial cross section changes discretely is a corner, and this intersection portion extends along the axis. Further, when the outer circumferential surface of the tubular body includes multiple curved surfaces, the intersection portion at which adjacent curved surfaces intersect with each other in a curved shape in the radial cross section and at which the inclination of a tangent line in the radial cross section changes discretely is a corner, and this intersection portion extends along the axis. The "corner" includes a chamfered and curved portion. A chamfered portion refers to a curved shape having a smaller curvature than a flat surface or a curved surface of the outer circumferential surface of a tubular body.

With the above-described configuration, the tubular body includes a fabric layer in which multiple fabric materials are laminated. Each fabric material includes a fabric in which reinforcing fibers are woven and a plastic with which the fabric is impregnated. In the fabric layer, since the reinforcing fibers are crimped at the portions at which the warp yarns and the weft yarns intersect with each other, the reinforcing fibers readily follow the shape of the corners of the tubular body. This prevents voids from forming between the layers of the fabric materials. In addition, the tubular body has excellent bending stiffness.

A unidirectional material layer is laminated on each of the inner circumferential surface and the outer circumferential surface of the fabric layer. Each unidirectional material includes reinforcing fibers oriented in one direction and a plastic with which the reinforcing fibers are impregnated. Even when a bending load is applied to such a tubular body, the tubular body is prevented from breaking apart completely. Therefore, the tubular body has excellent bending stiffness and is prevented from breaking apart completely.

In accordance with another aspect of the present disclosure, a method for producing a tubular body made of a fiber-reinforced plastic and used as a structural material of a vehicle is provided. The tubular body includes one or more corners extending along an axis of the tubular body on an outer circumferential surface thereof. The method includes: laminating four or more shaped bases around a core, the four or more shaped bases including multiple unidirectional materials, each unidirectional material including reinforcing fibers oriented in one direction and a plastic with which the reinforcing fibers are impregnated, and multiple fabric materials, each fabric material including a fabric in which reinforcing fibers are woven and a plastic with which the fabric is impregnated; and heating the four or more shaped bases disposed around the core. The laminating includes: disposing the at least one of the unidirectional materials around the core such that the reinforcing fibers are oriented along an axis of the core; disposing the fabric materials around the at least one unidirectional material; and disposing at least one of the unidirectional materials around the fabric materials such that the reinforcing fibers are oriented along the axis of the core.

With the above-described configuration, multiple fabric materials that include a fabric in which reinforcing fibers are woven and plastic with which the fabric is impregnated are disposed around the unidirectional material. In each fabric material, the reinforcing fibers are crimped at portions at which warp yarns and weft yarns intersect with each other. Therefore, even if the core or the die has corners, the reinforcing fibers readily conform to the shape of the inner surface of the die. This improves the formability at the corners, and allows for formation of a tubular shape in which the occurrence of voids at the corners is prevented. A tubular body having excellent bending stiffness is thus obtained.

The unidirectional materials are arranged before and after the fabric material is arranged. Accordingly, the unidirectional material layer is laminated on each of the inner circumferential surface and the outer circumferential surface of the fabric layer, in which the fabric materials are laminated. The unidirectional material has its reinforcing fibers oriented along the axis of the core. Therefore, in the formed tubular body, the unidirectional material layer is exposed on each of the inner circumferential surface and the outer circumferential surface. Thus, even when a bending load is applied, the tubular body is prevented from breaking apart completely. A tubular body is produced that has excellent bending stiffness and is prevented from breaking apart completely.

### BRIEF DESCRIPTION OF DRAWINGS

Fig. 1 is a perspective view of a square pipe, which is a tubular body according to an embodiment.
Fig. 2 is a diagram illustrating a method for producing the square pipe shown in Fig. 1.
Fig. 3A is a cross-sectional view of a square pipe according to a first modification.
Fig. 3B is a cross-sectional view of a square pipe according to a second modification.
Fig. 3C is a cross-sectional view of a square pipe according to a third modification.
Fig. 4 is a diagram illustrating a three-point bending test.
Fig. 5 is a graph showing results of the three-point bending test.
Fig. 6A is a photograph showing a result of the three-point bending test of a square pipe of Example 1.
Fig. 6B is a photograph showing a result of the three-point bending test of a square pipe of Comparative Example 2.

### DESCRIPTION OF EMBODIMENTS

A tubular body according to one embodiment will now be described.

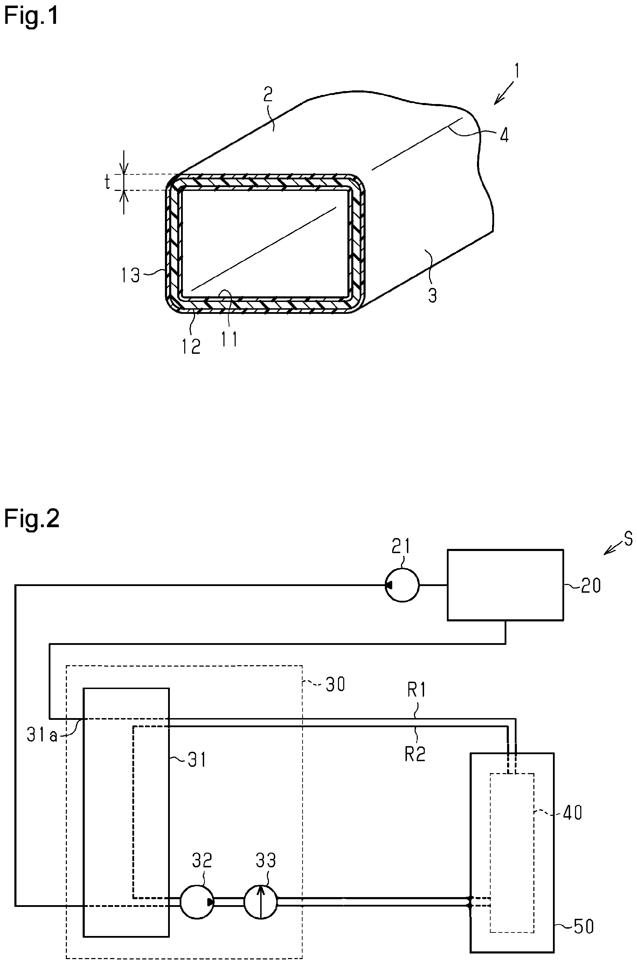

As shown in Fig. 1, one example of the tubular body in the present disclosure is a square pipe 1 that has a rectangular radial cross section. Tubular bodies generally used as structural members of a vehicle include a round pipe having a round radial cross section and a deformed pipe having a deformed radial cross section. In addition to a tubular body extending linearly, a tubular body extending in a curved manner or a tubular body extending in a partially bent manner may be used.

As described above, an example of the tubular body has corners extending along the axis of the tubular body on the outer circumferential surface. The tubular body of the present disclosure does not include a round pipe, but includes a square pipe and a deformed pipe. The tubular body of the present disclosure includes not only a tubular body extending linearly, but also a tubular body extending in a curved manner and a tubular body partially extending in a bent manner. In the following description, for illustrative purposes, an example of a square pipe 1 having a rectangular radial cross section and extending linearly will be described.

The square pipe 1 has two long side walls 2 corresponding to the long sides in a rectangular cross section and two short side walls 3 corresponding to the short sides in the rectangular cross section. A corner 4 extending along the axis of the square pipe 1 is positioned at a boundary between each long side wall 2 and each short side wall 3.

The length along the axis of the square pipe 1 is, for example, about 700 mm. In a radial cross section of the square pipe 1, the length of each long side wall 2 is, for example, about 50 mm, and the length of each short side wall 3 is, for example, about 30 mm. The thickness t of the long side wall 2 is about the same as the thickness t of the short side wall 3. The thicknesses t may be about 0.8 to 3.0 mm or about 1.2 to 2.2 mm. When the thickness t is in these ranges, it is possible to provide a pipe that has a strength necessary for a structural member of a vehicle while being lightweight.

As shown in Fig. 1, the square pipe 1 is a tubular laminate in which an inner unidirectional material layer 11, a fabric layer 12, and an outer unidirectional material layer 13 are laminated in that order from the inner side. The inner unidirectional material layer 11, the fabric layer 12, and the outer unidirectional material layer 13 are formed from four or more shaped bases that are fiber-reinforced plastic materials. Each of the inner unidirectional material layer 11 and the outer unidirectional material layer 13 is formed of a shaped base containing reinforcing fibers oriented in one direction and a plastic with which the reinforcing fibers are impregnated. The fabric layer 12 is formed of a shaped base including a fabric of reinforced fibers and a plastic with which the reinforcing fibers are impregnated.

The material for the fiber-reinforced plastic material forming the shaped base is not particularly limited. As the reinforcing fibers and plastic, conventionally known ones can be used. Examples of the reinforcing fibers include carbon fibers, glass fibers, and aramid fibers. The plastic may be a thermosetting plastic, for example, an epoxy plastic or a polyester plastic. As the shaped base, a commercially available unidirectional material or fabric material can be selected.

The reinforcing fibers included in each of the inner unidirectional material layer 11 and the outer unidirectional material layer 13 are oriented along the axis of the square pipe 1. The inner unidirectional material layer 11 may be formed of one unidirectional material or may be a layer in which two or more unidirectional materials are laminated. Similarly, the outer unidirectional material layer 13 may be formed of one unidirectional material or may be a layer in which two or more unidirectional materials are laminated.

In the square pipe 1, the ratio of the thickness of the inner unidirectional material layer 11 to the thickness t of each of the long side walls 2 and the short side walls 3 may be, for example, 10% or less, or 5% or less. Similarly, the ratio of the thickness of the outer unidirectional material layer 13 to the thickness t may be, for example, 10% or less, or 5% or less. When the ratio of the thickness of each of the inner unidirectional material layer 11 and the outer unidirectional material layer 13 is within these ranges, appropriate bending stiffness is imparted to the square pipe 1. When a bending load is applied to the square pipe 1, it is prevented from breaking apart completely. The thickness of the inner unidirectional material layer 11 and the outer unidirectional material layer 13 may be the same or different.

The fabric layer 12 has a laminated structure in which multiple fabric materials are laminated. The fabric included in the fabric layer 12 is, for example, a plain weave, a twill weave, or a satin weave, but is not limited thereto and can be appropriately selected from conventionally known fabrics. The fabrics included in the fabric layer 12 may all have the same weave, or may be a combination of fabrics having different weaves.

In the fabric layer 12, the reinforcing fibers are woven as warp yarns and weft yarns, and the warp yarns and the weft yarns extend in directions orthogonal to each other. In the fabric layer 12, the warp yarns or weft yarns may be oriented along the axis of the square pipe 1, or may be oriented in a direction intersecting the axis. The fabric sheets may be laminated such that the warp warns and the weft yarns extend in the same direction. Alternatively, the fabric sheets may be laminated such that the warp yarns and the weft yarns extend in different directions. When the warp yarns or the weft yarns are oriented along the axis, the bending stiffness of the square pipe 1 is improved. When the warp yarns or the weft yarns are oriented in a direction intersecting with the axis, for example, in a direction forming an angle of 45° with the axis, the clogging stiffness of the square pipe 1 is improved. In the square pipe 1 of the present embodiment, the warp yarns or the weft yarns are oriented along the axis of the square pipe 1 in a part of the fabric material included in the fabric layer 12.

The number of the fabric materials included in the fabric layer 12 is not particularly limited, and may be, for example, in range of 5 to 15. When the number of the fabric materials is within this range, appropriate bending stiffness can be imparted to the square pipe 1, while reducing the weight of the square pipe 1.

The reinforcing fibers included in the inner unidirectional material layer 11, the fabric layer 12, and the outer unidirectional material layer 13 may have a tensile modulus of elasticity of 70 GPa or more or 200 GPa or more. When the reinforcing fibers forming the fiber-reinforced plastic material are glass fibers or aramid fibers, they may be high-strength glass fibers or high-strength aramid fibers having a tensile modulus of elasticity of 70 GPa or more. In addition, when the reinforcing fibers are carbon fibers, a tensile modulus of elasticity greater than or equal to 200 GPa is obtained.

Further, the tensile strength of the reinforcing fibers may be greater than or equal to 3000 MPa or greater than or equal to 3500 MPa. In a case in which the reinforcing fibers forming the fiber-reinforced plastic material are glass fibers or aramid fibers, they may be high-strength glass fibers or high-strength aramid fibers having a tensile strength of 3000 MPa or more. When the reinforcing fibers are carbon fibers, a tensile strength greater than or equal to 3500 MPa is obtained.

When the tensile modulus of elasticity and the tensile strength are in the above ranges, a square pipe 1 having excellent tensile strength is obtained. The tensile modulus of elasticity of the reinforcing fibers of the inner unidirectional material layer 11, the fabric layer 12, and the outer unidirectional material layer 13 may be the same or different from each other. Also, the tensile strength of the reinforcing fibers of the inner unidirectional material layer 11, the fabric layer 12, and the outer unidirectional material layer 13 may be the same or different from each other.

Since the square pipe 1 of the present embodiment has a rectangular radial cross section, the two side walls 3 facing each other, that is, the first side wall 3 and the second side wall 3 extend in parallel to each other. Likewise, the two side walls 2 facing each other, that is, the first side wall 2 and the second side wall 2, extend parallel to each other. In this case, for example, at least one of the tensile modulus of elasticity and the tensile strength of the reinforcing fibers may be different between the first side wall 3 and the second side wall 3. In this case, when the two side walls 3 facing each other receive bending loads, for instance due to a collision of the vehicle, the reinforcing fibers oriented along the axis of the square pipe 1 in one of the side walls 3 and those in the other side walls 3 are positioned on the compressing side and the pulled side, respectively. By making the tensile strength on the pulled side higher than the tensile strength on the compressing side, it is possible to further effectively prevent the square pipe 1 from breaking apart.

### <Producing Method of Square Pipe 1>

Next, a method for producing the square pipe 1 will be described. Hereinafter, a case in which the square pipe 1 is produced using a shaped base in which carbon fibers are impregnated with an epoxy plastic, which is a thermosetting plastic, will be described.

As shown in Fig. 2, the square pipe 1 is produced by a hydroforming method using a forming system S. The forming system S includes a die 50 and a bag 40, which is a core disposed inside the die 50, and is configured to circulate superheated steam into the bag 40.

The forming system S includes a cold water circulation device 20, a temperature control circulation device 30, the bag 40, and the die 50. The forming system S is configured to cause water, which is a fluid, to flow between devices constituting the forming system S while changing the state of the water. The square pipe 1 is formed by laminating four or more shaped bases in a cavity of the die 50 and hardening the shaped bases through heating in the die 50.

Water is stored in the cold water circulation device 20. A supply pump 21 is incorporated in the cold water circulation device 20, and water is supplied from the cold water circulation device 20 to the temperature control circulation device 30 by driving the supply pump 21.

The temperature control circulation device 30 includes a heating device 31, a pressurizing pump 32, and a temperature sensor 33. The heating device 31 heats the water supplied from the cold water circulation device 20 to 100°C or higher to generate superheated steam. The pressurizing pump 32 adjusts a supply pressure when the superheated steam generated by the heating device 31 is supplied to the bag 40. The pressurizing pump 32 is provided with pressure adjusting means (not shown) for adjusting the supply pressure of the superheated steam. The temperature sensor 33 detects the temperature of the superheated steam generated by the heating device 31.

The bag 40 is placed inside the die 50 prior to forming. The die 50 defines the outer shape of the square pipe 1 when clamped. At the time of the forming process, shaped bases are disposed in the die 50. Also, at the time of the forming process, the superheated steam generated by the heating device 31 is supplied into the bag 40 via the pressurizing pump 32, and the superheated steam is circulated between the bag 40 and the temperature control circulation device 30. For this reason, the bag 40 is formed in a tubular shape from a plastic having excellent heat resistance and flexibility.

The method of producing the square pipe 1 includes a shaped base disposing step, a die clamping step, a forming step, a completion step, and a follow-up step.

In the shaped base disposing step, shaped bases are disposed in the cavity of the die 50, more specifically, the lower die. At this time, one or more unidirectional materials forming the outer unidirectional material layer 13 of the square pipe 1 are disposed first. The unidirectional materials are arranged so that the reinforcing fibers extend along the longitudinal direction of the cavity of the die 50. That is, the reinforcing fibers are oriented along the axis of the bag 40, which serves as the core. Subsequently, multiple fabric materials to be the fabric layer 12 of the square pipe 1 are disposed. The warp yarns or the weft yarns of at least one of the fabric materials are arranged along the longitudinal direction of the cavity. Subsequently, one or more unidirectional materials forming the inner unidirectional material layer 11 of the square pipe 1 are disposed. The unidirectional materials are arranged so that the reinforcing fibers extend along the longitudinal direction of the cavity of the die 50. The step of disposing the unidirectional materials forming the outer unidirectional material layer 13 is a first step. The step of disposing the fabric materials forming the fabric layer 12 is a second step. The step of disposing the unidirectional materials forming the inner unidirectional material layer 11 is a third step.

In the die clamping step, the bag 40 is placed in the die 50, and the die 50 is clamped. More specifically, the bag 40 is disposed on the shaped bases in the cavity of the lower die so that the bag 40 is wrapped by the shaped bases. The upper die is mounted on the lower die and the die 50 is clamped.

Prior to the forming step, the forming system S is activated. The supply pump 21 and the pressurizing pump 32 of the forming system S are turned on, and a discharge port 31a in the heating device 31 is opened. The discharge port 31a is provided in the fluid passage connected to the cold water circulation device 20. At this time, heating by the heating device 31 is not performed. The water in the cold water circulation device 20 is supplied to the heating device 31 by driving the supply pump 21, and the water in the heating device 31 is supplied into the bag 40 by driving the pressurizing pump 32. The water in the bag 40 returns to the cold water circulation device 20 via the heating device 31. This forms a first route R1, which circulates fluid through the cold water circulation device 20, the temperature control circulation device 30, and the bag 40 in the die 50. By circulating the cold water supplied from the cold water circulation device 20 through the first route R1, the interior of the temperature control circulation device 30, the interior of the bag 40, or the interior of the fluid passage connecting the cold water circulation device 20, the temperature control circulation device 30, and the bag 40 is filled with water before the forming process. As a result, air in the fluid passage and the like is removed.

In the forming step, the shaped bases are heated by the forming system S to form the square pipe 1. More specifically, first, the supply pump 21 is turned off and the discharge port 31a is closed. Accordingly, the fluid in the heating device 31 is supplied into the bag 40 by driving the pressurizing pump 32, and a second route R2 is formed, in which the fluid circulates between the temperature control circulation device 30 and the bag 40 in the die 50. The forming step is performed by selecting the second route R2.

In the forming step, first, the pressurizing pump 32 on the second route R2 is turned off. In this state, the heating device 31 starts heating, and superheated steam having a specified temperature and a specified pressure is generated from the water in the heating device 31. The temperature of the superheated steam is set to a temperature slightly higher than the thermosetting temperature of the thermosetting plastic contained in the fiber-reinforced plastic shaped bases.

When the superheated steam in the heating device 31 reaches a predetermined temperature, the pressurizing pump 32 is turned on to supply the superheated steam into the bag 40 and circulate the superheated steam through the second route R2. In the bag 40 to which the superheated steam is supplied, the internal pressure is increased by the pressure of the superheated steam to press the shaped bases against the inner surface of the cavity of the die 50. Further, the heat of the superheated steam causes the thermosetting plastic contained in the shaped bases, for example, an epoxy plastic, to start thermal hardening.

The temperature of the superheated steam in the heating device 31 is adjusted based on a detection value of the temperature of the superheated steam detected by the temperature sensor 33 at regular time intervals. When it is determined that the detected value is lower than a target value of the superheated steam, the heating device 31 continues heating. When it is determined that the detected value is higher than the target value, the first route R1 is temporarily selected, and the temperature of the superheated steam is adjusted by supplying the temperature control circulation device 30 with water from the cold water circulation device 20.

In the forming step, the epoxy plastic constituting the shaped bases is thermally hardened in the die 50 to form the square pipe 1. Since the shaped bases are pressed against the inner surface of the cavity of the die 50 by the high pressure of the superheated steam, formation of gaps between layers of the shaped bases is prevented. In the square pipe 1 formed in this way, generation of voids is prevented.

In the completion step of stopping the forming system S, the first route R1 in the forming system S is selected. The supply pump 21 and the pressurizing pump 32 are turned on, and the discharge port 31a is opened. The superheated steam present in the fluid passages of the heating device 31, the bag 40, and the second route R2 is discharged from the discharge port 31a and transferred to the cold water circulation device 20. The superheated steam gradually discharges heat in the fluid passage to the cold water circulation device 20 to lower the temperature, and is mixed with the water in the cold water circulation device 20 to be discharged to the outside of the cold water circulation device 20.

In the follow-up step, the die 50 is opened and the square pipe 1 is taken out together with the bag 40 from the inside of the die 50. If necessary, the bag 40 is removed from the inside of the square pipe 1, or the bag 40 is cut off at the opposite edges of the square pipe 1. The square pipe 1 is thus obtained.

### Operation of Square Pipe 1

Next, operation of the square pipe 1, which is a tubular body, will be described.

The square pipe 1 has a rectangular radial cross section. A corner 4 extending along the axis of the square pipe 1 is positioned at a boundary between each long side wall 2 and each short side wall 3.

An intermediate layer of the square pipe 1 is the fabric layer 12, in which multiple fabric materials are laminated. The fabric layer 12 is one of the layers of the square pipe 1. in the fabric layer 12, reinforcing fibers in the fabric material are oriented in a direction along the axis of the square pipe 1 and a direction orthogonal to the axis. In this layer, since the reinforcing fibers oriented to be orthogonal to the axis of the square pipe 1 are derived from the fabric material, the reinforcing fibers are shaped to follow the shape of the corners 4 at the corners 4. Therefore, generation of a gap between the layers of the fabric material is prevented, and as a result, generation of voids in the corners 4 is prevented. In addition, since the formability at the corners 4 is favorable, the plastic contained in the fabric material is prevented from stagnating at the corners 4. As a result, the plastic is prevented from being unevenly distributed over the entire square pipe 1.

The inner layer of the square pipe 1 is the inner unidirectional material layer 11, and the outer layer of the square pipe 1 is the outer unidirectional material layer 13. In the inner unidirectional material layer 11 and the outer unidirectional material layer 13, the reinforcing fibers included in each unidirectional material are oriented along the axis of the square pipe 1. This gives bending stiffness the square pipe 1 and thus improves strength against bending load. In addition, since the inner layer and the outer layer of the square pipe 1 are unidirectional materials, even if the square pipe 1 starts to break when receiving a large bending load, the unidirectional materials prevent the square pipe 1 from breaking apart completely.

The advantages of the square pipe 1 and the method of producing the square pipe 1 will now be described.
(1) The square pipe 1 is a tubular body used as a structural member of a vehicle. The square pipe 1 has a fabric layer 12 in the middle of its side walls in the thickness direction.

Therefore, the reinforcing fibers readily follow the shape of the corners 4 of the square pipe 1, and generation of voids at the corners 4 is prevented. As a result, voids are prevented from becoming starting points of breakage of the square pipe 1. The bending stiffness of the square pipe 1 is thus improved.

(2) The inner unidirectional material layer 11 and the outer unidirectional material layer 13 are laminated on the inner circumferential surface and the outer circumferential surface of the fabric layer 12, respectively. The inner unidirectional material layer 11 and the outer unidirectional material layer 13 contain reinforcing fibers extending along the axis of the square pipe 1.

Therefore, the bending stiffness of the square pipe 1 is thus improved. In addition, since the unidirectional material layers 11, 13 are laminated on the inner circumferential surface and the outer circumferential surface of the fabric layer 12, the square pipe 1 is prevented from breaking apart completely when a strong bending load is applied to the square pipe 1. As a result, when the tubular body, which is a vehicle structural member, is broken at the time of a vehicle collision or the like, it is possible to avoid a situation in which broken square pipes pierce unexpected portions.

(3) Since the square pipe 1 includes the fabric layer 12, the formability of the square pipe 1 at the corners 4 is improved, and plastic is prevented from accumulating excessively at the corners 4. Thus, the square pipe 1 having uniform and stable properties is obtained.

(4) In the square pipe 1, the warp yarns or the weft yarns are oriented along the axis of the square pipe 1 in the fabric material included in the fabric layer 12.

Therefore, the bending stiffness is improved by the fabric material in which the reinforcing fibers are oriented along the axis of the square pipe 1.

(5) The method of producing the square pipe 1 includes the shaped base disposing step, which disposes the shaped bases around the bag 40, and the forming step, which heats the shaped bases in the die 50. In the shaped base disposing step, the fabric material is disposed in the cavity of the die 50.

Therefore, it is not necessary to align a shaped base, in which the reinforcing fibers are oriented along the axis of the square pipe 1, with a shaped base in which the reinforcing fibers are oriented in the direction orthogonal to the axis. As compared with a case in which the square pipe 1 is formed of only a unidirectional material, the positioning of the reinforcing fibers is simple.

(6) In the shaped base disposing step, the fabric materials, which are the shaped bases, are disposed.

The flexibility of the fabric allows the reinforcing fibers to conform to the corners in the cavity. This improves the formability at the corners, and thus prevents the generation of voids at the corners 4 of the square pipe 1.

(7) Each fabric material is formed as a single shaped base by weaving warp yarns and weft yarns.

Therefore, compared to a case in which unidirectional materials are laminated, slippage between layers of the reinforcing fibers orthogonal to each other is suppressed. This simplifies the shaped base disposing step.

(8) The square pipe 1 is formed by a hydroforming method.

Therefore, not only the temperature necessary for forming the square pipe 1 is achieved, but also a high pressure based on the superheated steam is achieved inside the bag 40. This allows the shaped bases to be pressed against the inner surface of the die 50 with a strong pressing force. This limits formation of gaps between layers of the shaped bases having multiple layers and limits formation of voids in the square pipe 1. As a result, a square pipe 1 having excellent bending stiffness is produced.

(9) The temperature control circulation device 30 includes the heating device 31, which generates superheated steam, and the temperature sensor 33, which detects the temperature of the superheated steam. The temperature sensor 33 detects the temperature of the superheated steam, and the temperature of the superheated steam in the heating device 31 is adjusted based on the detected value.

Therefore, the superheated steam having a desired temperature and pressure is always supplied into the bag 40, while limiting variations in the forming temperature and the forming pressure.

(10) The forming system S of the above-described embodiment includes the cold water circulation device 20, which circulates fluid between the cold water circulation device 20 and the temperature control circulation device 30.

Therefore, since water can be circulated between the cold water circulation device 20 and the bag 40 via the temperature control circulation device 30 at the start of the forming process, the insides of the devices and the insides of the fluid passages can be filled with water before the forming process. Further, at the end of the forming process, the superheated steam generated in the forming step can be discharged to the outside together with the water in the cold water circulation device 20. In this manner, the supply of the fluid at the start of the forming process and the discharge of the fluid at the end of the forming process are performed in a simple manner.

The above-described embodiment may be modified as follows. The above-described embodiment and the following modifications can be combined as long as the combined modifications remain technically consistent with each other.

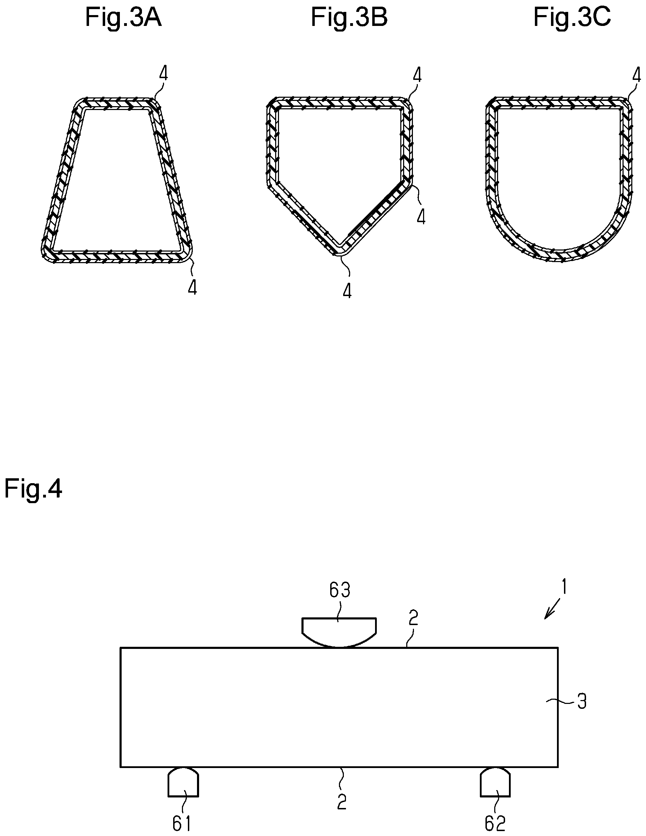

In the above-described embodiment, the tubular body is described as the square pipe 1, of which the radial cross section is rectangular. However, the shape of the tubular body is not limited to this. For example, as shown in Fig. 3A, the tubular body may have a trapezoidal radial cross section. Alternatively, as shown in Fig. 3B, the tubular body may have a pentagonal shape with an irregular radial cross section. Further, as shown in Fig. 3C, the tubular body may have a curved side wall and a radial cross section including a linear section and a curved section. Alternatively, the tubular body may have a polygonal radial cross section.

The advantages of the fabric layer 12 being the intermediate layer are readily achieved when, in the radial cross section of the tubular body, the angle of each corner 4 is an acute angle or is close to an acute angle. That is, when the corner 4 has an acute angle or an angle close to an acute angle, a void is more likely to form at the corner 4 in the tubular body formed of the unidirectional material. However, the advantage of limiting the generation of a void is made more remarkable by forming the tubular body with the fabric material.

The method of producing the square pipe 1 is not limited to the hydroforming method. For example, a method may be employed in which multiple shaped bases are wound around a mandrel, which is a core, and the shaped bases are hardened through heating in a die. In this case, first, a unidirectional material to be the inner unidirectional material layer 11 is wound around the mandrel. Then, multiple fabric materials, to be the fabric layer 12, are wound around the outer circumferential surface of the unidirectional material to be the inner unidirectional material layer 11. Subsequently, a unidirectional material, to be the outer unidirectional material layer 13, is wound around the outer circumferential surface of the fabric material to be the fabric layer 12. The resultant article is placed in a die, and the die is clamped. The article is hardened through heating at a specified temperature for a specified time. When the mandrel is removed from the die, a tubular body is obtained.

In this case, the step of winding the unidirectional material to be the inner unidirectional material layer 11 is the first step. The step of winding the fabric materials to be the fabric layer 12 is the second step. The step of winding the unidirectional material to be the outer unidirectional material layer 13 is the third step.

### EXAMPLES

Examples of the tubular body will now be described.

### <Forming of Tubular Body>

### Example 1

A square pipe 1 as a tubular body was formed according to the hydroforming method. The square pipe 1 was a straight tubular body having a rectangular radial cross section of 28 mm × 48 mm and a length of 700 mm. Each of the inner unidirectional material layer 11 and the outer unidirectional material layer 13 included a single unidirectional material arranged so that the orientation direction of reinforcing fibers was along the axis of the square pipe 1. The unidirectional materials were sheet prepregs (P3252S-10, produced by Toray Industries, Inc.), which were sheet-shaped bases in which carbon fibers were impregnated with epoxy plastic.

The fabric materials constituting the fabric layer 12 were laminated in the following order from the outer periphery of the square pipe 1: two layers in which the orientation of the reinforcing fibers was ±45° relative to the axis of the square pipe 1, one layer in which the orientation of the reinforcing fibers was 0°/90° relative to the axis of the square pipe 1, and two layers in which the orientation of the reinforcing fibers was ±45° relative to the axis of the square pipe 1. The fabric materials were each a sheet prepreg (F6343B-05P, produced by Toray Industries, Inc.), which was a sheet-shaped base in which carbon fibers were impregnated with epoxy plastic.

The type of the shaped base of each of the inner unidirectional material layer 11, the fabric layer 12, and the outer unidirectional material layer 13, the thickness t (mm) of the side walls, and the orientation angle (°) of the reinforcing fibers with respect to the axis of the square pipe 1 are as shown in Table 1. The thickness t of the side walls of the square pipe 1 was 1.55 mm. The square pipe 1 thus obtained was defined as Example 1.

**[Table 1]**

| | Layer Structure | Shaped Base | | Thickness t (nm) | Fiber | Orientation Direction(') |
|---|---|---|---|---|---|---|
| 1 | Inner Unidirectional Material Layer | Unidirectional Material | P3252S-10 | 0.1 | Carbon Fiber | 0 |
| 2 | Fabric Layer | Fabric Material | F6343B-05P | 0.23 | Carbon Fiber - Plain Weave | ±45 |
| 3 | | Fabric Material | F6343B-05P | 0.23 | Carbon Fiber - Plain Weave | ±45 |
| 4 | | Fabric Material | F6343B-05P | 0.23 | Carbon Fiber - Plain Weave | 0/90 |
| 5 | | Fabric Material | F6343B-05P | 0.23 | Carbon Fiber - Plain Weave | ±45 |
| 6 | | Fabric Material | F6343B-05P | 0.23 | Carbon Fiber - Plain Weave | ±45 |
| 7 | Outer Unidirectional Material Layer | Unidirectional Material | P3252S-10 | 0.1 | Carbon Fiber | 0 |

### Comparative Example 1

The square pipe 1 was formed in the same manner as in Example 1 except that only unidirectional materials were used as the shaped bases. Fourteen layers of the unidirectional materials were laminated such that the orientation directions of the reinforcing fibers were a direction along the axis of the square pipe 1, a direction perpendicular to the axis, and a direction at 45° with respect to the axis. The unidirectional materials were all sheet prepregs (P3252S-10, produced by Toray Industries, Inc.), which were sheet-shaped bases in which carbon fibers were impregnated with epoxy plastic. The type of the shaped base of each layer, the thickness t (mm) of the side walls, and the orientation angle (°) of the reinforcing fibers with respect to the axis of the square pipe 1 are as shown in Table 2. The thickness t of the side walls of the square pipe 1 was 1.60 mm. The square pipe 1 thus obtained was defined as Comparative Example 1.

**[Table 2]**

| | Layer Structure | Shaped Base | | Thickness t (mm) | Orientation Direction (°) |
|---|---|---|---|---|---|
| 1 | Unidirectional Material Layer | Unidirectional Material | F6343B-05P | 0.1 | 45 |
| 2 | | Unidirectional Material | F6343B-05P | 0.1 | 90 |
| 3 | | Unidirectional Material | F6343B-05P | 0.1 | -45 |
| 4 | | Unidirectional Material | F6343B-05P | 0.1 | 0 |
| 5 | | Unidirectional Material | F6343B-05P | 0.1 | 45 |
| 6 | | Unidirectional Material | F6343B-05P | 0.1 | 90 |
| 7 | | Unidirectional Material | F6343B-05P | 0.1 | -45 |
| 8 | | Unidirectional Material | F6343B-05P | 0.1 | -45 |
| 9 | | Unidirectional Material | F6343B-05P | 0.1 | 90 |
| 10 | | Unidirectional Material | F6343B-05P | 0.1 | 45 |
| 11 | | Unidirectional Material | F6343B-05P | 0.1 | 0 |
| 12 | | Unidirectional Material | F6343B-05P | 0.1 | -45 |
| 13 | | Unidirectional Material | F6343B-05P | 0.1 | 90 |
| 14 | | Unidirectional Material | F6343B-05P | 0.1 | 45 |

### Comparative Example 2

The square pipe 1 was formed in the same manner as in Example 1 except that only fabric materials were used as the shaped bases. Seven layers of the fabric materials were laminated such that the orientation directions of the reinforcing fibers were at 0°, 90°, and ±45° with respect to the axis of the square pipe 1. The fabric materials were all sheet prepregs (F6343B-05P, produced by Toray Industries, Inc.), which were sheet-shaped bases in which carbon fibers were impregnated with epoxy plastic. The type of the shaped base of each layer, the thickness t (mm) of the side walls, and the orientation angle (°) of the reinforcing fibers with respect to the axis of the square pipe 1 are as shown in Table 3. The thickness t of the side walls of the square pipe 1 was 1.80 mm. The square pipe 1 thus obtained was defined as Comparative Example 2.

**[Table 3]**

| | Layer Structure | Shaped Base | | Thickness t (mm) | Fiber | Orientation Direction(°) |
|---|---|---|---|---|---|---|
| 1 | Fabric Layer | Fabric Material | F6343B-05P | 0.23 | Carbon Fiber - Plain Weave | ±45 |
| 2 | | Fabric Material | F6343B-05P | 0.23 | Carbon Fiber - Plain Weave | ±45 |
| 3 | | Fabric Material | F6343B-05P | 0.23 | Carbon Fiber - Plain Weave | 0/90 |
| 4 | | Fabric Material | F6343B-05P | 0.23 | Carbon Fiber - Plain Weave | ±45 |
| 5 | | Fabric Material | F6343B-05P | 0.23 | Carbon Fiber - Plain Weave | 0/90 |
| 6 | | Fabric Material | F6343B-05P | 0.23 | Carbon Fiber - Plain Weave | ±45 |
| 7 | | Fabric Material | F6343B-05P | 0.23 | Carbon Fiber - Plain Weave | ±45 |

### <Evaluation of Bending Stiffness>

The square pipes 1 of Example 1 and Comparative Examples 1 and 2 were subjected to three-point bending tests to evaluate the bending stiffness. The three-point bending tests were conducted in accordance with JIS K 7074.

As shown in Fig. 4, the square pipe 1 was supported by two supporting points 61 and 62. The distance between the supporting points 61 and 62 was set to the 500 mm. The square pipe 1 was supported such that the long side walls 2 extended in the vertical direction. The square pipe 1 was pressed from above at a center position in the longitudinal direction with an indenter 63, and a bending load (N) on the square pipe 1 and the amount of deflection (mm) of the square pipe 1 were measured. The measurement was continued even after the square pipe 1 began to break, to determine whether the square pipe 1 would ultimately break apart.

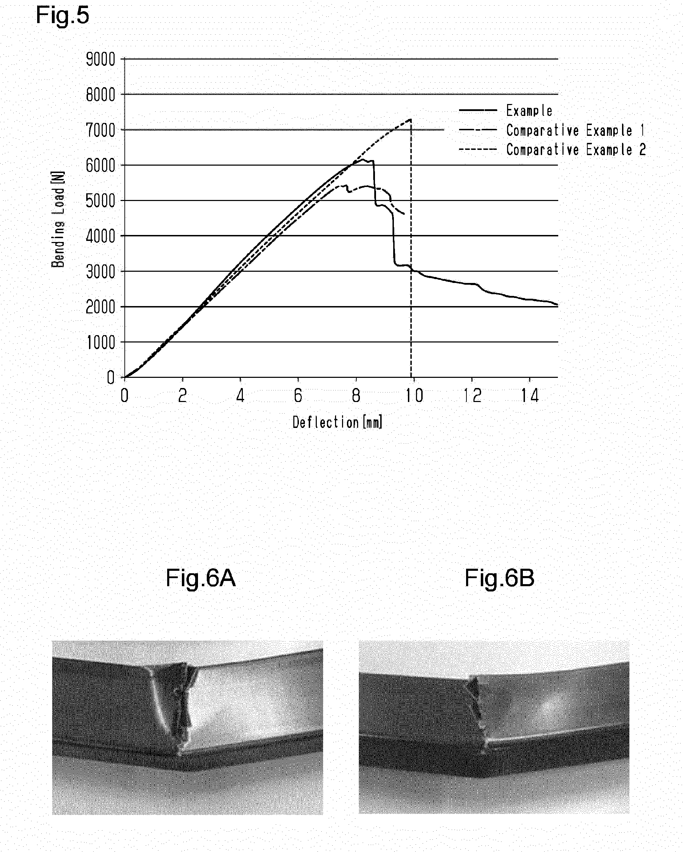

Fig. 5 shows deflection (mm) curves with respect to the bending load (N) on the square pipes 1 of Example 1 and Comparative Examples 1 and 2. Appearance photographs of the square pipes 1 of Example 1 and Comparative Example 2 after the evaluation of bending stiffness are shown in Fig. 6. Fig. 6A shows the appearance of the square pipe 1 of Example 1, and Fig. 6B shows the appearance of the square pipe 1 of Comparative Example 2.

The results shown in Fig. 5 show that the bending stiffness of the square pipe 1 of Comparative Example 1, in which only unidirectional materials were used as the shaped bases, was lower than those of the other square pipes 1. The bending stiffness of the square pipe 1 of Comparative Example 2, in which only fabric materials were used as the shaped bases, was higher than that of the square pipe 1 of Comparative Example 1. However, when the deflection amount reached a certain value, the bending load became 0 at once. At this time, as shown in Fig. 6B, the square pipe 1 of Comparative Example 2 had broken apart completely.

On the other hand, in the square pipe 1 of Example 1, in which the unidirectional material layers 11 and 13 were respectively laminated as the shaped bases on the inner circumferential surface and the outer circumferential surface of the fabric layer 12, the bending stiffness was higher than that of the square pipe 1 of Comparative Example 1, but lower than that of the square pipe 1 of Comparative Example 2. This is considered to be because the thickness t of the side walls of the square pipe 1 of Comparative Example 2 was 1.80 mm, whereas the thickness t of the side walls of the square pipe 1 of Example 1 was as thin as 1.55 mm. In this regard, when the values obtained by dividing the bending loads by the thicknesses t of the respective side walls were compared, it was found that the square pipe 1 of Example 1 had a bending stiffness equivalent to that of the square pipe 1 of Comparative Example 2.

In addition, in the square pipe 1 of Example 1, even when the amount of deflection reached a certain level or more and the bending load was reduced, the bending load did not become 0 at once, but was maintained at a constant level. At this time, as shown in Fig. 6A, the square pipe 1 of Example 1 had not broken apart completely, and was maintained in a state of being connected across the broken portion.

## Claims

1. A tubular body made of a fiber-reinforced plastic and used as a structural material of a vehicle, the tubular body comprising one or more corners extending along an axis of the tubular body on an outer circumferential surface thereof, wherein
the tubular body is a tubular laminate formed by laminating
a fabric layer in which multiple fabric materials are laminated, each fabric material including a fabric in which reinforcing fibers are woven and a plastic with which the fabric is impregnated; and
multiple unidirectional material layers, each unidirectional material layer including reinforcing fibers oriented in one direction and a plastic with which the reinforcing fibers are impregnated,
the reinforcing fibers of each unidirectional material layer are oriented along the axis, and
the unidirectional material layers include:
an outer unidirectional material layer laminated on an outer circumferential surface of the fabric layer; and
an inner unidirectional material layer laminated on an inner circumferential surface of the fabric layer.

2. The tubular body according to claim 1, wherein the fabric layer includes one or more fabric materials in which warp yarns or weft yarns of the fabric are oriented along the axis.

3. The tubular body according to claim 1 or 2, wherein
the tubular laminate includes a first side wall and a second side wall that face each other,
the first side wall and the second side wall extend parallel to each other, and
the unidirectional material layer in the first side wall includes reinforcing fibers having a higher tensile strength than that of the unidirectional material layer in the second side wall.

4. A method for producing a tubular body made of a fiber-reinforced plastic and used as a structural material of a vehicle, the tubular body including one or more corners extending along an axis of the tubular body on an outer circumferential surface thereof, the method comprising:
laminating four or more shaped bases around a core, the four or more shaped bases including:
multiple unidirectional materials, each unidirectional material including reinforcing fibers oriented in one direction and a plastic with which the reinforcing fibers are impregnated, and
multiple fabric materials, each fabric material including a fabric in which reinforcing fibers are woven and a plastic with which the fabric is impregnated; and heating the four or more shaped bases disposed around the core,
wherein the laminating includes:
disposing the at least one of the unidirectional materials around the core such that the reinforcing fibers are oriented along an axis of the core;
disposing the fabric materials around the at least one unidirectional material; and
disposing at least one of the unidirectional materials around the fabric materials such that the reinforcing fibers are oriented along the axis of the core.

5. The method for producing the tubular body according to claim 4, wherein the disposing of the fabric materials includes orienting warp yarns or weft yarns of at least one of the fabric materials along the axis of the core.

6. A method for producing a tubular body, the method comprising:
disposing a shaped base made of a fiber-reinforced plastic in a cavity of a die;
placing a bag inside the die and clamping the die;
supplying superheated steam into the bag; and
heating the shaped base while pressing it against an inner surface of the die by heat and pressure from the bag containing the superheated steam.

7. The method for producing the tubular body according to claim 6, further comprising:
heating water in a heating device to produce superheated steam; and
circulating the superheated steam between the heating device and the bag when heating the shaped base while pressing it against the inner surface of the die.
